# EUROPEAN PATENT APPLICATION

(11) **EP 1 288 526 A1**
(43) Date of publication of application: **05.03.2003**
(21) Application number: 02015554.5
(22) Date of filing: 11.07.2002
(51) Int. Cl.: F16F 13/30

(54) **Magnetorheological fluid-type vibration absorbing device**

(30) Priority: 24.08.2001 JP 2001255167
(71) Applicant: TOYO TIRE & RUBBER CO., LTD ., Osaka 550-0002 (JP)
(72) Inventor: Sakata, Toshifumi, Toyo Tire & Rubber Co., Ltd., Osaka 550-0002 (JP)
(74) Representative: Strehl Schübel-Hopf & Partner

(57) **Abstract**

To be able to exhibit precise and sufficient vibration damping performance with regard to vibration not only in the low frequency region but also a wide range of high frequencies with less power consumption, an MR fluid pathway (9) for hermetically sealing and holding the MR fluid (8) is formed to be of crankshaft shape in cross section with vertical pathway portions (9A, 9B) and horizontal pathway portions (9C), the pathway being between a piston-shaped member (6) and a cylindrical member (7) capable of displacing relative to each other in the direction of elastic deformation of the elastomer (5) due to applied vibration, an electromagnet (10) capable of forming a magnetic field across the horizontal pathway portions (9C) of the pathway (9), controlling the amplitude of the magnetic field to thereby change the viscosity of the MR fluid (8), fixed and supported on the piston-shaped member (6).

## Description

### BACKGROUND OF THE INVENTION

### 1. Field of the Invention

The present invention relates to a vibration absorbing device applicable to for instance a base vibration isolation device interposed between an apparatus mounting base and the ground or a floor surface, used to eliminate or reduce vibration of the apparatus mounting base due to earthquake or vehicle running, on which various apparatuses set up at semiconductor manufacturing factories and the like are mounted and supported, and to a fluidic vibration absorbing device mainly applicable to engine mounts to absorb and dampen vibration by elastically supporting automobile engines on a vehicle body.

### 2. Description of Related Art

Vibration absorbing devices such as base vibration isolation devices are required to absorb and reduce instantly vibration which excites the apparatus mounting base, and also absorb minute vibration in a low frequency range constantly occurring on the ground or the floor surface. As a vibration absorbing device to cope with such demand, a device made up of an elastic film using rubber elastomer and the like, or an active type base vibration isolation device capable of reducing vibration which excites the apparatus mounting base and minute vibration in a low frequency region occurring on the ground by externally driving and controlling a piezo-actuator so as to interfere with vibration on the apparatus mounting base are known.

The following fluidic type vibration absorbing device applicable to engine mount and the like is suggested: a partition wall made up of elastic membrane using rubber elastomer and the like so as to divide the inside of the hollow body containing elastomer, such as elastic rubber and diaphragm, into main and subsidiary liquid chambers, and a damping orifice for letting a part of the liquid contained in the main liquid chamber flow into the subsidiary liquid chamber side when compressed due to deformation of elastic rubber when vibration is applied, are provided; if vibration in a low frequency region is applied, variation of liquid pressure in the main liquid chamber is absorbed to attenuate vibration by letting the liquid contained in the main liquid chamber flow through the orifice into the subsidiary liquid chamber; or if the vibration in a high frequency region is applied to put the orifice in the state of being closed, the device is constructed to absorb the variation of liquid pressure in the main liquid chamber by the elastic displacement of the partition wall made up of the elastic membrane; or as disclosed, for example, in the JP-A-224885/1995 or JP-A-164181/1993 official gazette, with a part of side wall of the main liquid chamber made up of a movable plate or a vibration plate (hereinafter referred to as movable plate or the like), variation of liquid pressure in the main liquid chamber, when vibration in the high frequency region is applied, is absorbed by displacing the movable plate and the like through electromagnetic force caused by a combination of an electromagnet and magnetic fluid.

However, in regard to a device configured by the use of the elastic membrane such as rubber elastomer among conventional vibration absorbing devices applicable to the base vibration isolation device and the like and conventional fluidic vibration absorbing device applicable to engine mounts and the like, attenuating performance is exhibited only to the vibration in special frequency region (a single range or very narrow range), and sufficient attenuating performance is not exhibited with regard to the vibration in a frequency region other than that, this needed in order to always keep constant rigidity of the elastic membrane itself (spring constant) irrespective of vibration frequency.

In regard to the active-type base vibration isolation device configured to reduce base vibration by applying vibration to interfere with that of the apparatus mounting base by driving and controlling the piezo-actuator among conventional vibration absorbing devices applicable to the base vibration isolation device and the like, it is necessary to minutely drive and control the piezo-actuator so as to always apply proper interferential vibration according to vibration frequency either in the case of vibration which excites the apparatus mounting base and minute vibration in a low frequency range constantly occurring on the ground and the floor surface. Accordingly, there are the problems of large-size of the device as a whole pursuant to the use of the piezo-actuator, raising initial cost restricting the degree of freedom of design, increasing power consumption and making high running cost unavoidable.

Furthermore, in regard to conventional fluidic vibration isolation device with a part of the side wall of the main liquid chamber made up of a movable plate and the like displaced through electromagnetic force which is generated by a combination of an electromagnet and magnetic fluid, it is possible to adjust the liquid pressure in the main liquid chamber by means of displacement of movable plate and the like, but resonance frequency cannot be adjusted or can only be adjusted in a limited narrow frequency range, therefore there is a problem that damping performance cannot be exhibited sufficiently with regard to vibration in a wide range of high frequencies.

### SUMMARY OF THE INVENTION

In view of the aforementioned problems or difficulties, this invention has been accomplished and provides a vibration absorbing device and a fluidic type vibration absorbing device capable of exhibiting precise and sufficient vibration-damping performance to vibration not only in the low frequency region but also a wide range of high frequency region with less power consumption while being compact on the whole and with a higher degree of freedom of design so that the cost is reduced.

In order to accomplish the aforementioned objects, a vibration absorbing device according to the present invention as set forth in claim 1 is fitted through an elastomer on the vibration generating side and an elastomer on the vibration receiving side, has a pathway formed between a piston-shaped member and a cylindrical member capable of displacing relative to each other in the direction of generating vibration attendant on elastic deformation of the elastomer when vibration is applied, to hermetically seal and hold MR fluid, the viscosity of which varies depending on the amplitude of magnetic field, so that it is capable of flowing, and is provided with an electromagnet to form a magnetic field across the pathway and be able to control the strength of the magnetic field for changing the viscosity of the MR fluid, wherein the pathway of the MR fluid is formed to be of crankshaft shape in cross section having pathway portions located parallel to each other along the direction of relative displacement of the piston-shaped member and the cylindrical member and a pathway portion at the portion of the magnetic field crossing the pathway, in a direction perpendicular or nearly perpendicular to the direction of the above relative displacement so as to connect the above pathways with each other.

In order to accomplish the objectives described above, a fluidic type vibration absorbing device according to the present invention as set forth in claim 4 is provided with a piston-shaped partition located inside of the hollow body formed by two attachment members connected with the vibration generating portion and the vibration receiving portion respectively and the elastomer fitted between these two attachment members so that the piston-shaped partition divides the inside of the hollow body into main and subsidiary liquid chambers, capable of displacing in the direction of respective expansion and contraction of the liquid chambers due to deformation of elastomer when vibration is applied and has a pathway formed between the piston-shaped partition and the cylindrical member contacting the side of the hollow body and surrounding the outer circumference of the piston-shaped partition to hermetically seal and hold the MR fluid, the viscosity of which varies depending on the amplitude of magnetic field strength, so that it is capable of flowing, and is provided with an electromagnet to form a magnetic field across the pathway and which is able to control the amplitude of the magnetic field and thereby change the viscosity of the MR fluid, wherein the pathway for hermetically sealing and holding the MR fluid is formed to be of crankshaft shape in cross section having pathway portions located parallel to each other along the direction of displacement of the piston-shaped partition and a pathway portion at the crossing portion of the magnetic field that is perpendicular or nearly perpendicular to the direction of relative displacement of the piston-shaped partition so as to connect those pathways with each other.

According to the present invention as set forth in claims 1 and 4 with the features and configurations described above, a definite vibration damping performance is exhibited by absorbing vibration in the low frequency region by means of proper liquid pressure variation absorbing action consisting of letting the liquid contained in the elastomer or main liquid chamber flow through the damping orifice into the subsidiary liquid chamber, this done by rigidifying the piston body or piston-shaped partition (hereinafter referred to as a piston body) after maximizing the viscosity of the MR fluid through conduction of electromagnet when vibration in the low frequency region is applied, thereby increasing the spring constant of the piston-shaped member. On the other hand, sufficient damping performance can be exhibited for vibration in a wide range of high frequencies by controlling conduction current to the electromagnet to increase/decrease the viscosity of the MR fluid and arbitrarily and extensively vary the rigidity of the piston body itself, thus adjusting minutely the resonance of vibration of the piston body, that is, resonance frequency, over a wide range.

Especially, since the pathway of the MR fluid is formed in the form of a crankshaft in cross section and the magnetic field crosses the pathway perpendicular or nearly perpendicular to the direction of displacement of the piston body out of the crankshaft-shaped pathway is adopted, it is possible to rapidly increase the rigidity of the piston body by increasing the viscocity of the MR fluid of the pathway at the portion crossing the magnetic field when electric current is turned on, damming up the MR fluid. In detail, for example, by forming the pathway of the MR fluid in a straight line and applying the magnetic field across a part of the straight pathway, it is possible to increase the rate of change of spring constant (rigidity) with electric current more than the method of increasing the rigidity through the internal frictional force of the MR fluid the viscosity of which increases in with electric current. Accordingly, as aforementioned, it is possible to reduce the running cost by exhibiting exact and sufficient vibration damping performance against vibration in the low frequency region and a wide range of high frequency region at less consumption power as well as rapid changing of the vibration frequency against which there is rigidity.

In regard to the vibration absorbing device and fluidic type vibration absorbing device of the configuration described above, the electromagnet may be fixed and supported located at the outer circumference of the piston body close to the cylinder body. Especially as set forth in claims 2 and 5, the whole device can be configured compactly when the electromagnet is fixed and supported on the piston body side to make the best use of the inside space on the piston body side for installation space of the electromagnet.

In regard to the vibration absorbing device and fluidic type vibration absorbing device of the configuration described above, as set forth in claims 3 and 6, leakage of magnetic flux produced by the electromagnet is diminished and magnetic flux on the pathway portion where the magnetic field crosses the MR fluid pathway is concentrated as much as possible by constructing the cylinder member from a yoke portion made of ferromagnetic material to strengthen the magnetic field crossing the pathway located perpendicular or nearly perpendicular to the direction in which the piston body out of the MR fluid pathway and a ring portion made of nonmagnetic or feeble magnetic material surrounding and holding the yoke portion are displaced relative to each other, allowing power consumed for exhibiting definite-frequency vibration damping to be further reduced as well as expediting changeover of the vibration frequency producing rigidity.

### BRIEF DESCRIPTION OF THE DRAWINGS

Fig. 1 is a semi vertical sectional view of base vibration isolation device which is one example of the vibration absorbing device according to the invention as set forth in claims 1 to 3.
Fig.2 is a schematic perspective view showing the use of the base vibration isolation device as set forth in claims 1 to 3.
Fig.3 is an overall vertical sectional view showing the first embodiment of an engine mount as one example of the fluidic vibration absorbing device according to the invention as set forth in claims 4 to 6.
Fig.4 is a vertical sectional view of the principal part of Fig.3.
Fig.5 is an enlarged semi vertical sectional view of the principal part.
Fig.6 is an enlarged semi vertical sectional view of the principal part showing the second embodiment of the engine mount.
Fig.7 is an enlarged semi vertical sectional view of the principal part showing the third embodiment of the engine mount.
Fig.8 is an enlarged semi vertical sectional view of the principal part showing the fourth embodiment of the engine mount.
Fig.9 is an enlarged semi vertical sectional view of the principal part showing the fifth embodiment of the engine mount.
Fig.10 is an enlarged semi vertical sectional view of the principal part showing a device according to the invention used for experiment.
Fig.11 is an enlarged semi vertical sectional view of the principal part showing a device used for comparison in the experiment.
Fig.12 is a graph showing the result of the experiment, the electric current/spring constant relation for the device according to the invention and the comparative device.

### DESCRIPTION OF THE PREFERRED EMBODIMENTS

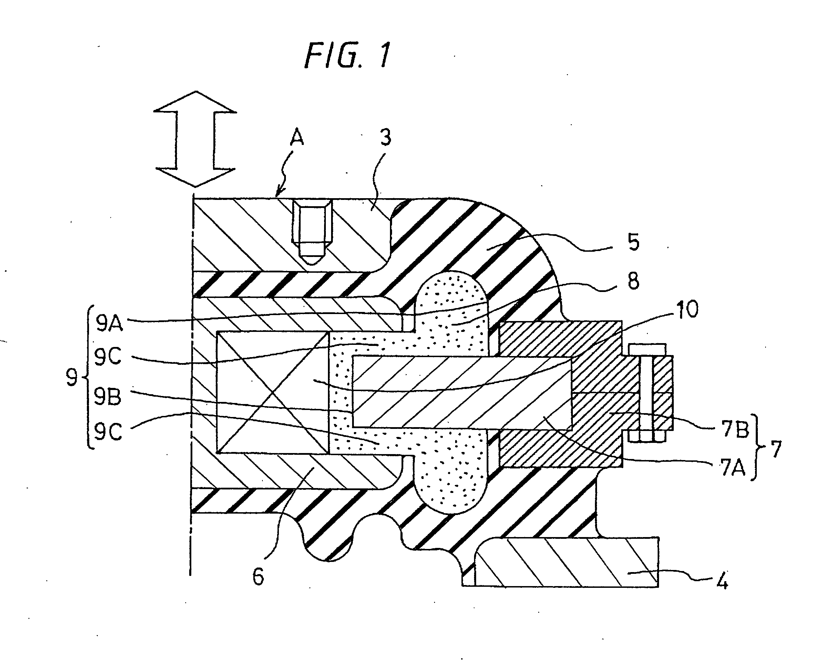

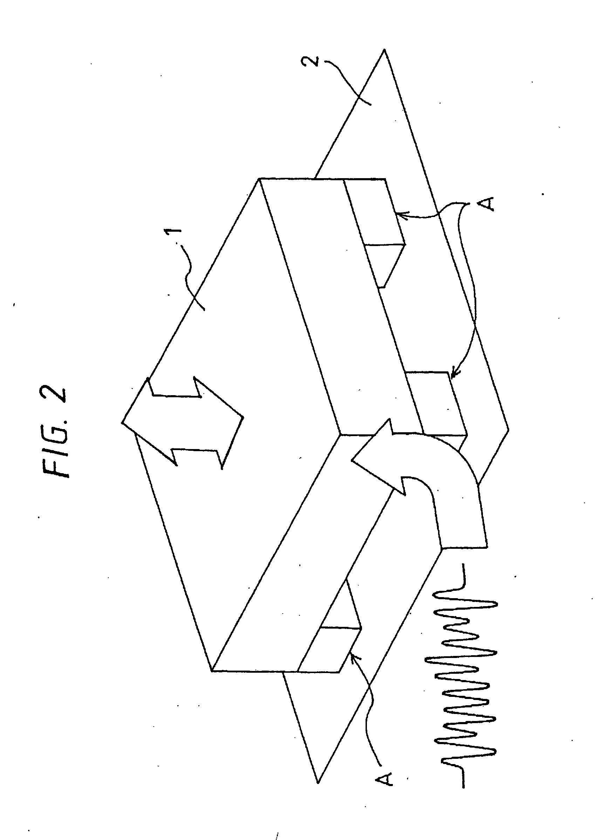

Fig. 1 shows semi vertical sectional structure of the base vibration isolation device as one example of vibration absorbing device according to the invention as set forth in claims 1 to 3. As shown in Fig.2, the base vibration isolation device A is interposed between the apparatus mounting base 1, which serves as a vibration producing portion, and the ground or floor surface 2 (hereinafter referred to as floor surface) of for instance a semiconductor manufacturing factory, which serves as a vibration receiving portion, equipped with a piston-shaped member 6 and a cylindrical member 7 fitted through elastomers 5 of elastic rubber and the like between an attachment fitting 3 on the lower surface of the apparatus mounting base 1 and an installation fixing member 4 to the floor surface 2 and so forth, wherein these piston-shaped member 6 and the cylindrical member 7 are configured in the direction of vibration application, that is, vertically so as to be able to move relatively to each other in accordance with the elastic deformation of the elastomer 5 occuring when vibration is applied such as vibration which excites the apparatus mounting base 1 or minute vibration occurring on the floor surface 2 side and the like.

The cylindrical member 7 comprises an annular yoke portion 7A made of ferromagnetic material and projecting toward the piston member 6 and a ring portion 7B made of nonmagnetic or weakly magnetic material surrounding and fixedly holding the outer circumferential portion of the yoke portion 7A. An MR fluid pathway 9 hermetically sealing and holding the MR fluid 8, the viscosity of which varies depending on the amplitude of the magnetic field, so that it is capable of flowing is formed by both piston member 6 and yoke 7A and the elastomer 5 between the yoke portion 7A of the cylindrical member 7 and the piston-shaped member 6.

The pathway of the MR fluid 9 is formed to be of crankshaft shape in cross section on the whole, having a pair of upper and lower vertical pathway portions 9A, 9A and intermediate vertical pathway portion 9B located parallel to each other in the direction of upper and lower relative displacement of the piston-shaped member 6 and the cylindrical member 7 and a pair of upper and lower horizontal pathway portions 9C, 9C of width d1 narrower than the width d2 of each vertical pathway portion 9A, 9A, 9B located perpendicular or nearly perpendicular to the direction of upper and lower relative displacement so as to connect the pair of upper and lower vertical pathway portions 9A, 9A and intermediate vertical pathway portion 9B with each other.

At the region where the inner circumference of the yoke portion 7A of the cylinder member 7 contacts the outer circumference of the piston-shaped member 6, the electromagnet 10 forming the magnetic field mp across the pair of upper and lower horizontal pathway portions 9C, 9C of the MR fluid pathway 9 is disposed annularly and fixedly supported by the piston-shaped member 6. The viscosity of the MR fluid 8 can be increased or decreased by controlling electric current to the electromagnet 10 to control the strength of magnetic field across the upper and lower horizontal pathway portions 9C, 9C of the MR fluid pathway 9.

The MR fluid 8 is Bingham fluid with ferromagnetic metal fine particle of particle size not more than 1 to 10µm dispersed in high concentration suspension, has an operating temperature range of -40 to 150°C, its viscosity being changed depending on the strength of magnetic field, and is called as magnetic viscosity fluid or magnetic rheological fluid.

In regard to the base vibration isolation device A of the configuration described above, when vibration is transmitted to the apparatus mounting base 1, an electromagnet switch (not shown) is turned ON to flow the current to the electromagnet 10. When the strength of the magnetic field mp across upper and lower horizontal pathways 9C, 9C of the MR fluid pathway 9 is increased to maximize the viscosity of the MR fluid 8, the base vibration isolation device A is rigidified, and the vibration transmitted to the apparatus mounting base 1 can be absorbed and reduced. When vibration of the apparatus mounting base 1 comes to a stop, current to the electromagnet 10 is stopped, the viscosity of the MR fluid 8 is decreased, and upper and lower relative displacement of the piston-shaped member 6 and the cylindrical member 7 is allowed. Whereby, with the apparatus vibration isolation device A becoming flexible, minute vibration in a range of low frequencies constantly occurring on the floor surface and the like is absorbed by upper and lower relative displacement of the piston-shaped member 6 and the cylindrical member 7 in keeping with elastic deformation of the elastomer 5, thus allowing transmission of vibration to the apparatus mounting base 1 to be reduced.

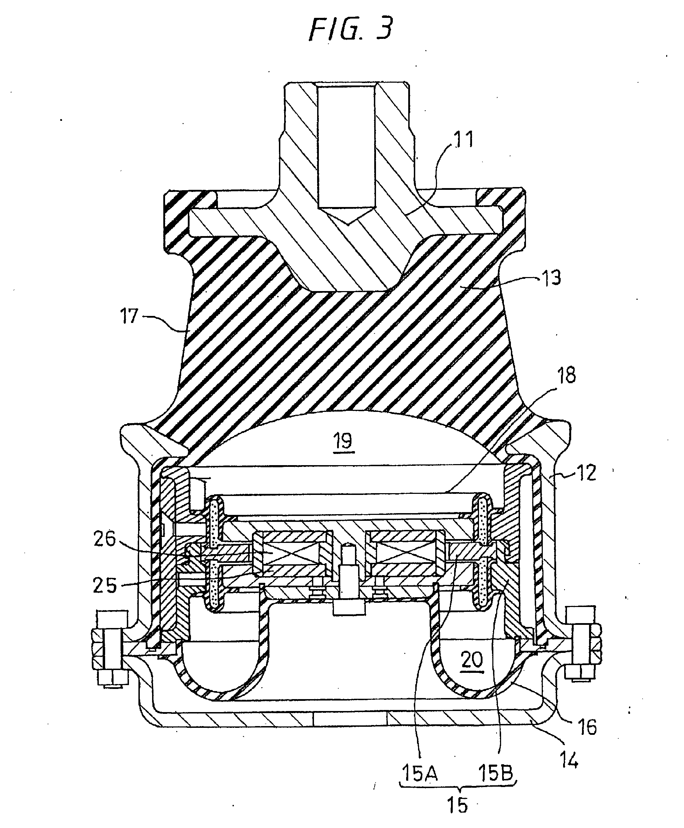

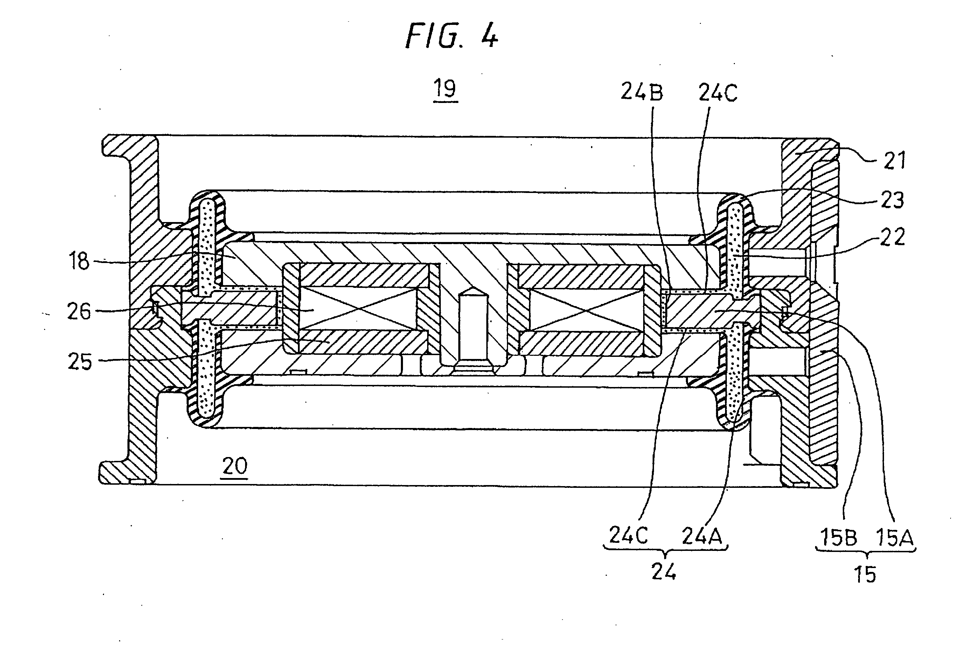

Fig.3 is a whole vertical sectional view showing a first embodiment of an engine mount of one example of fluidic type vibration absorbing device according to the invention as set forth in claims 1 to 3. Fig.4 is an enlarged vertical sectional view of the principal part. The engine mount B of the first embodiment is made up of a hollow device body 17 comprising an attachment fitting 11 capable of fitting on the vibration generating source side of an automobile engine and the like, a main fitting 12 in an annular form, an elastic rubber body 13 in nearly cylinder form connected between fittings 11 and 12, an attachment member 14 in the form of a plate capable of fitting on the vibration receiving side of the automobile frame and the like, a cylindrical member 15 fitted on the inner circumferential surface of the main fitting 12, and a diaphragm 16 projecting in toward the fitting member 14. Since a piston-shaped partition 18 is disposed inside of the cylindrical member 15 of the device body 17, two main and subsidiary liquid chambers 19, 20 are partitioned above and below the piston-shaped partition 18.

A damping orifice 21 is provided between two main and subsidiary liquid chambers 19, 20. The damping orifice 21 serves to mutually connect both liquid chambers 19, 20, to let a part of the liquid contained in the main liquid chamber 19 which is compressed due to elastic deformation of the body elastic rubber 13 when vibration is applied flow into the subsidiary liquid chamber 20, and absorb variation of liquid pressure in the main liquid chamber 19 through deformation of the diaphragm 16.

In regard to the engine mount B having the basic configuration described above, the cylindrical member 15 comprises an annular yoke portion 15A made of ferromagnetic material and projecting toward the piston-shaped partition 18, and a ring portion 15B made of nonmagnetic or feeble magnetic material surrounding and fixedly holding the outer circumferential portion of the yoke portion 15A. An MR fluid pathway 24 hermetically sealing and holding the MR fluid 22, the viscosity of which varies depending on the amplitude of the magnetic field, with a thin cover rubber 23 between the two so that the fluid is capable of flowing, is formed between the cylindrical member 15 and the piston-shaped partition 18.

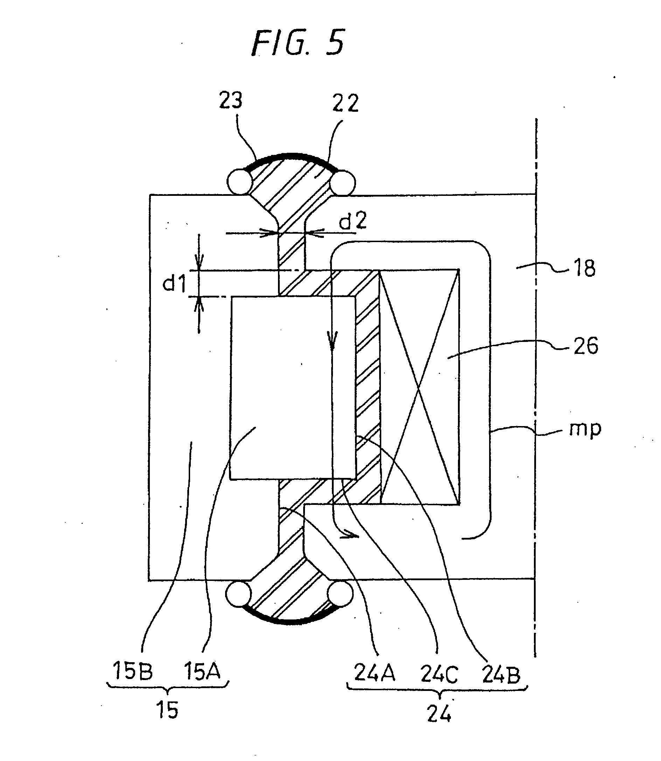

As shown in Fig.5, the pathway of the MR fluid 24 is formed to be of crankshaft shape in cross section on the whole, having upper and lower vertical pathway portions 24A, 24A located parallel to each other along the direction of upper and lower relative displacement of the piston-shaped partition 18 and the cylindrical member 15, an intermediate vertical pathway portion 24B located closer to the center of the engine mount B than the upper and lower vertical pathway portions 24A, 24A, and a pair of upper and lower horizontal pathway portions 24C, 24C of width d1 narrower than the width d2 of each vertical pathway portion 24A, 24A, 24B located perpendicular or nearly perpendicular to the direction of upper and lower relative displacement of the piston-shaped partition 18 and the cylindrical member 15 so as to connect those upper and lower vertical pathway portions 24A, 24A and the intermediate vertical pathway portion 24B.

On the piston-shaped partition 18 portion located at the edge of its inner circumference at the yoke portion 15A of the cylindrical member 15, the electromagnet 26 coated by nonferromagnetic material cover 25 and forming the magnetic field mp across upper and lower horizontal pathway portions 24C, 24C of the MR fluid pathway 24 is disposed annularly and fixedly supported to the piston-shaped partition 18. The viscosity of the MR fluid 22 can be increased or decreased by controlling electric current to the electromagnet 26 to control the strength of magnetic field mp across upper and lower horizontal pathway portions 24C, 24C of the MR fluid pathway 24.

In regard to the engine mount B of the configuration described above, under the condition where vibration occurs in low frequency region, the electromagnetic switch (not shown) is turned ON to flow the current into the electromagnet 26 and increase the strength of magnetic field formed in the magnetic field mp to maximize the viscosity of the MR fluid 22, thus rigidifying the piston-shaped partition 18. Under this condition, it is possible to dampen vibration in the low frequency region by means of liquid pressure variation absorbing action of conventional arts, where the liquid contained in the main liquid chamber 19 compressed due to elastic deformation of the body elastic rubber 13 pursuant to vibration being applied, is pushed through the damping orifice 21 into the subsidiary liquid chamber 20.

On the other hand, under the condition where vibration in the high frequency region occurs, it is possible to arbitrarily and extensively vary rigidity and vibration amplitude of the piston-shaped partition 18 by turning OFF the electromagnet switch to stop conducting the electromagnet 26 or turning ON the electromagnet switch and controlling current to the electromagnet 26, thus reducing the strength of magnetic field mp to zero, or adjusting its amplitude to increase or decrease the viscosity of the MR fluid 22. Thereby, resonance frequency of the piston-shaped partition 18 can finely be adjusted over a wide range to exhibit sufficiently large damping effects on vibration in a wide range of high frequencies.

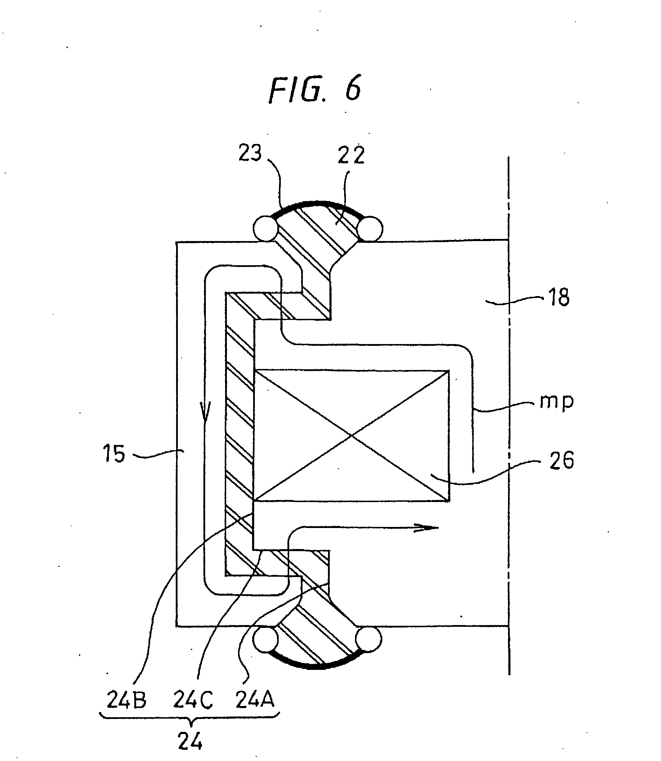

Fig.6 is an enlarged vertical sectional view of the principal part showing the second embodiment of the engine mount B. The second embodiment differs from the first embodiment in that an intermediate vertical pathway portion 24B of the MR fluid pathway 24 formed to be of crankshaft shape in cross section is located farther from the center of the engine mount B than a pair of upper and lower vertical pathway portion 24A, 24A, but otherwise this configuration is the same as the first embodiment. Accordingly, equivalent signs are given to the corresponding items, and the description of detailed structural and vibration absorbing operation is omitted.

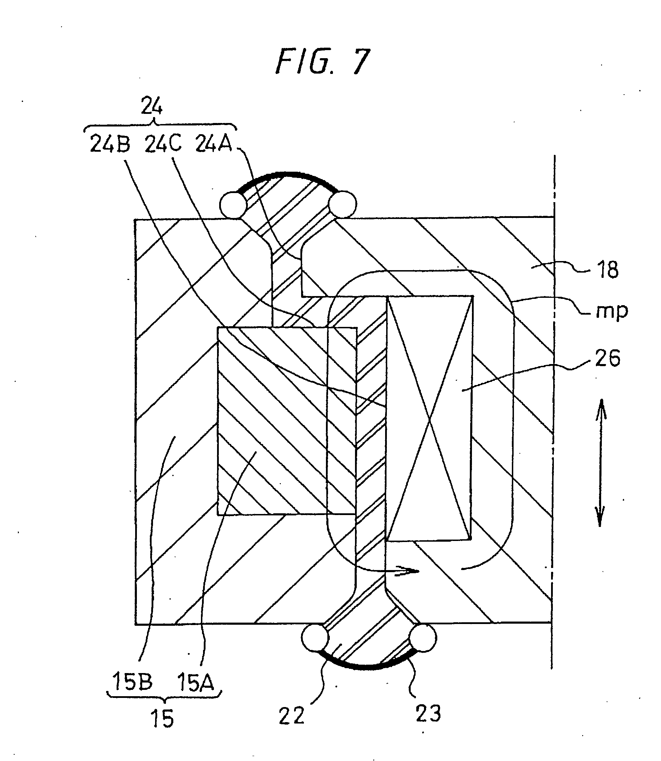

Fig.7 is an enlarged vertical sectional view of the principal part showing the third embodiment of the engine mount B. The third embodiment differs from the first embodiment in that the intermediate vertical pathway portion 24B and lower vertical pathway portion 24A of the MR fluid pathway 24 are arranged in the same straight line and the entire MR fluid pathway 24 is formed to be of half-crankshaft shape, but otherwise the configuration is the same as the first embodiment. Accordingly, equivalent signs are given to the corresponding items, and the description of detailed structural and vibration absorbing operation is omitted.

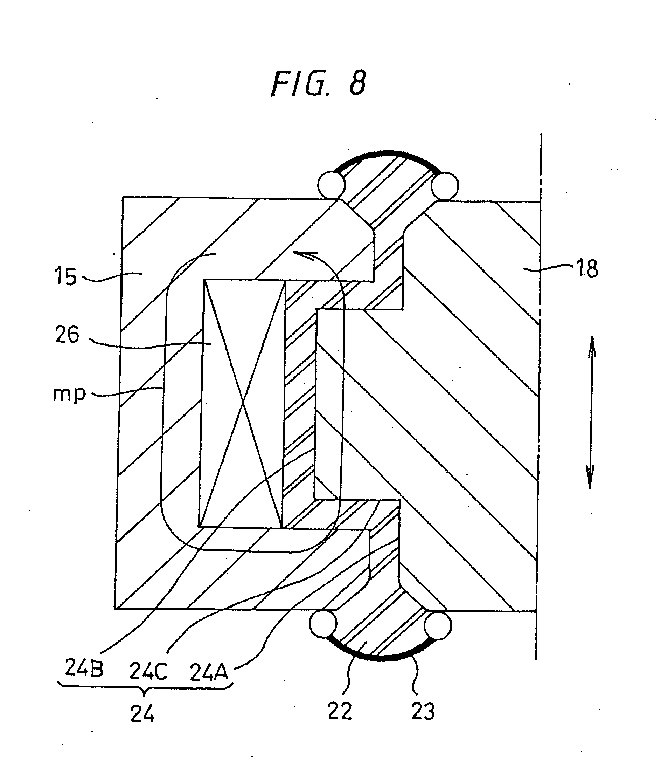

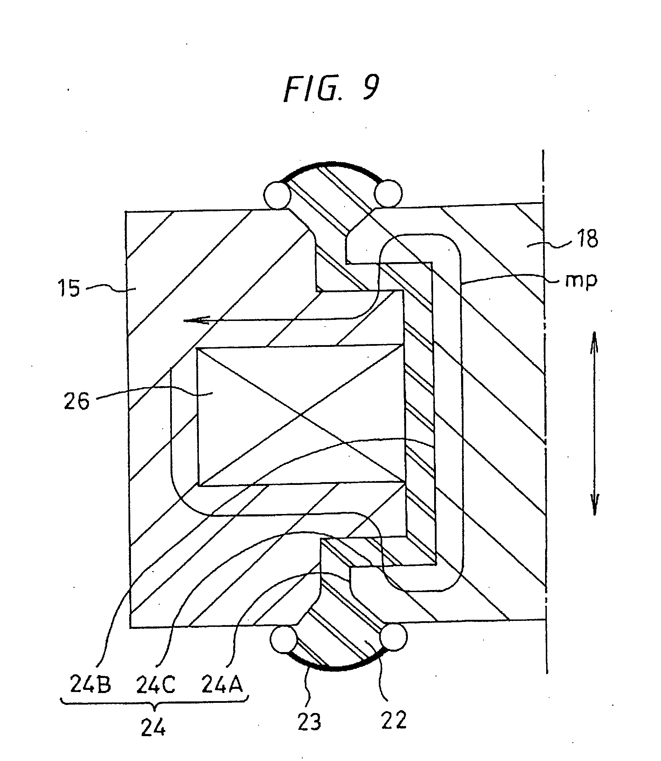

Figs.8 and 9 are enlarged vertical sectional views of the principal part of the fourth and fifth embodiments of the engine mount B. In the fourth and fifth embodiments, the electromagnet 26 is disposed and fixed on the cylindrical member 15. In regard to the arrangement of the electromagnet 26, the fourth and fifth embodiments differ from the first and second embodiments in that entire engine mount B has a little larger diameter, but otherwise the configuration is the same as the first and second embodiments. Accordingly, equivalent signs are given to the corresponding points, and the description of detailed structural and vibration absorbing operation is omitted.

In regard to the base vibration isolation device A and the engine mount B of the first to fifth embodiments, the MR fluid pathways 9 and 24 are formed to be of crankshaft shape in cross section, and disposed perpendicular or nearly perpendicular to the direction of relative displacement of the piston body 6 and the piston-shaped partition 18. Furthermore, it is configured to have the magnetic field mp cross horizontal pathway portions 9C and 24C of small width d1. Accordingly, when the MR fluid 8 and 22 of horizontal pathway portion 9C and 24C at the magnetic field crossing portions get hardened (viscosity increases) after current is turned on, the stream of the MR fluid 8 and 22 is dammed up and rigidity of the piston body 6 and the piston-shaped partition 18 rapidly increase. For example, as compared with the configuration in which the MR fluid pathway is formed in a straight line and a part of the straight pathway crosses the magnetic field, it is possible have a larger change of spring constant (rigidity) with change in conduction current.

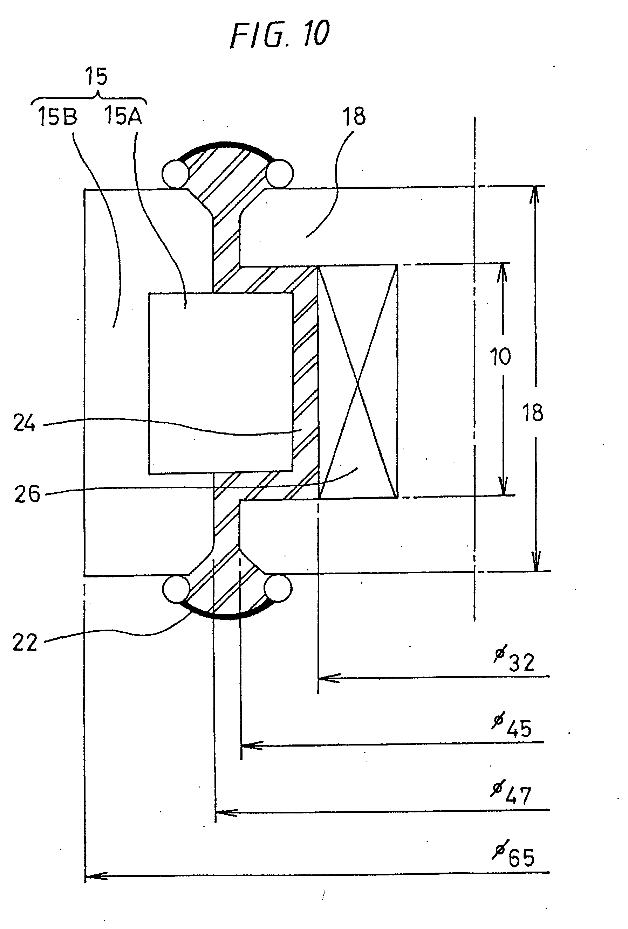

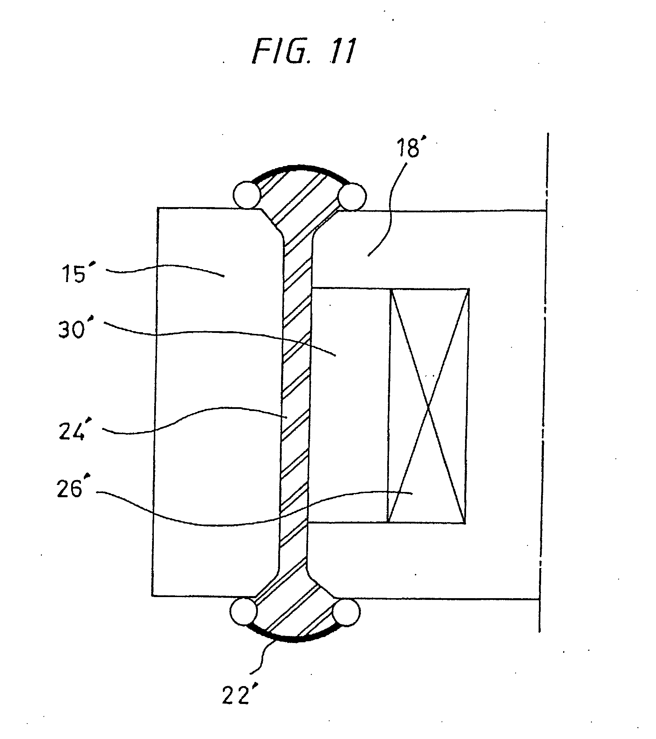

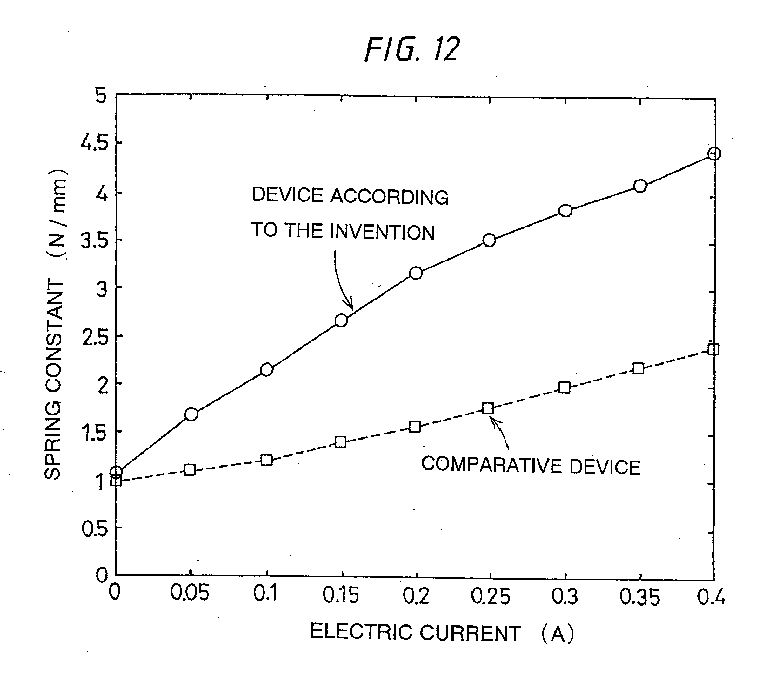

In this connection, as shown in Fig.10, an experiment was made to measure the rate of change of spring constant (N/mm) against an electric current (A) on the device according to the invention, in which the MR fluid pathway 24 of crankshaft shape in its cross section facing the inside is formed between the piston-shaped partition made of iron fixedly supporting the electromagnet 26 and the cylindrical member 15 made of an iron yoke portion 15A and a brass ring portion 15B similar to the MR fluid pathway in the engine mount described in the first embodiment, and each dimension is set to the numerical values put down in Fig.10 (Unit: mm), and on a device for comparison purposes, in which the MR fluid pathway 24' in the form of a vertical straight line is formed between an iron piston-shaped partition 18' fixedly supporting the electromagnet 26' and having an acrylic plate 30' outside of the electromagnet 26' and an iron cylindrical member 15' as shown in Fig.11 and each dimension is set similarly to the device according to the invention, and the result as shown in Fig.12 is obtained.

As shown in Fig.12, the device according to the present invention can derive a large spring with a small current in comparison with the conventional device. Therefore, it is possible to reduce the running cost while exhibiting exact and sufficient vibration damping performance against vibration in low frequency region and a wide range of high frequency region at less consumption power, as well as rapidly changing the vibration frequency at which rigidity occurs. In case of the device to be compared, since the MR fluid itself depends highly on inside friction force, a great deal of expensive MR fluid must be used. On the other hand, in the case of the device according to the invention, since the spring constant can be increased by physical engaging force deriving from the stream of the MR fluid being dammed up, very much less amount of MR fluid is required, also allowing the cost to be reduced in this aspect.

As mentioned above, according to the invention as set forth in claims 1 and 4, merely by adjusting the strength of magnetic field by controlling electric current applied to the electromagnet, synergism of use of the MR fluid capable of arbitrarily and extensively changing rigidity of the piston itself and adoption of a configuration forming the MR fluid pathway in the form of a crankshaft in section and so increasing the rate of change of the spring constant (rigidity) with change in electric current of the MR fluid causes the vibration absorbing device of the invention to have great effect at a place where vibration in high and low frequency region is mixed and occurs repeatedly, being capable of precise and sufficient damping of vibration not only in the low frequency region but also over a wide range of high frequencies with less power consumption while being compact on the whole and with higher degree of freedom of design allowing reduction in the initial cost and moreover being able to rapidly change the vibration frequency at which rigidity occurs.

Especially, by adopting the configuration as set forth in claims 2 and 5, the whole device can be still more compact, which enlarges the range of its uses.

## Claims

1. A vibration absorbing device **characterised by** being fitted through an elastomer to the vibration generating side and an elastomer to the vibration receiving side, having a pathway formed between a piston-shaped member (6) and a cylinder member (7) capable of displacing relative to each other in the direction of generating vibration attendant on elastic deformation of the elastomer (5) when such vibration is applied, and hermetically sealing and holding MR fluid (8) between them, the viscosity of which varies depending on the amplitude of magnetic field, so that it is capable of flowing and a flow pathway (9) is formed, and being provided with an electromagnet (10) to form a magnetic field crossing the flow pathway and thus being able to control the strength of the magnetic field for changing the viscosity of the MR fluid (8),
wherein the pathway (9) of the hermetically sealed MR fluid is in the form of a crankshaft in cross section having pathways (9A, 9C) located parallel to each other along the direction of relative displacement of the piston-shaped portion (6) and the cylindrical member (7) and a pathway portion (9C) at the position of the crossing magnetic field located along the direction perpendicular or nearly perpendicular to the direction of relative displacement of the piston-shaped portion (10) so as to connect the parallel pathway portions with each other.

2. A vibration absorbing device as set forth in claim 1, wherein the electromagnet (10) is fixed and supported on the piston-shaped portion side.

3. A vibration absorbing device as set forth in claim 1 or 2, wherein the cylinder member (7) is constructed from a yoke portion (7A) made of ferromagnetic material to strengthen the magnetic field crossing the pathway in the direction perpendicular or nearly perpendicular to the above relative displacing direction and a ring portion (7B) made of non-magnetic or weakly magnetic material surrounding and holding the yoke portion (7A).

4. A fluidic type vibration absorbing device **characterised by** being provided with a piston-shaped partition (18) located inside of the hollow body formed by two attachment members (11, 14) connected with the vibration generating portion and the vibration receiving portion respectively and an elastomer (13) fitted between these two attachment members, the piston-shaped partition (18) dividing the inside of the hollow body into main and subsidiary liquid chambers (19, 20), capable of displacing the piston-shaped partition (18) in the direction of relative change in volume of the two liquid chambers caused by deformation of elastomer when vibration is applied, and having a pathway formed between the piston-shaped partition (18) and the cylinder portion (15) contacting the hollow body and surrounding the outer circumference of the piston-shaped partition (18) to hermetically seal and hold the MR fluid (22) so that it is capable of flowing, the viscosity of which varies depending on the amplitude of the magnetic field, and provided with an electromagnet (26) forming a magnetic field across the pathway by which the amplitude of the magnetic field can be controlled for changing the viscosity of the MR fluid, wherein the pathway (24) of the MR fluid is in the form of a crankshaft in cross section having pathway portions (24A, 24B) located parallel to each other along the direction of relative displacement of the piston-shaped member and the cylindrical member and a pathway portion (24C) at the position of the crossing magnetic field in the direction perpendicular or nearly perpendicular to the direction of the above relative displacement so as to connect the parallel pathway portions (24A, 24B).

5. A fluidic type vibration absorbing device as set forth in claim 4, wherein the electromagnet (26) is fixed and supported on the piston-shaped partition side.

6. A fluidic type vibration absorbing device as set forth in claim 4 or 5, wherein the cylindrical member (15) is constructed from a yoke portion (15A) made of ferromagnetic material to strengthen the magnetic field crossing the pathway which is crank-shaped in cross section located along the direction perpendicular or nearly perpendicular to the relative displacing direction of the piston-shaped partition (18) and a ring portion (15B) made of non-magnetic or weakly magnetic material surrounding and holding the yoke portion (15A).
